# EUROPÄISCHE PATENTANMELDUNG

(11) **EP 3 985 043 A1**
(43) Veröffentlichungstag der Anmeldung: **20.04.2022**
(21) Anmeldenummer: 20202560.7
(22) Anmeldetag: 19.10.2020
(51) Int. Cl.: C08G 18/08, C08G 18/10, C08G 18/34, C08G 18/75

(54) **VERFAHREN ZUR HERSTELLUNG VON WÄSSRIGEN POLYURETHANDISPERSIONEN MIT AROMATISCHEN TRI- ODER TETRACARBONSÄUREN ALS HYDROPHILIERUNGSMITTEL**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Verfahren zur Herstellung von wässrigen Polyurethan-Dispersionen, mindestens umfassend die folgenden Schritte I) Umsetzung von mindestens einem organischen Polyisocyanat (A1) mit mindestens einem polymeren Polyol (A2) mit zahlenmittlerem Molekulargewicht von ≥ 400 g/mol bis ≤ 8000 g/mol und einer OH-Funktionalität von ≥ 1,5 bis ≤ 6 unter Erhalt mindestens eines NCO-terminierten Präpolymers, II) Reaktion des mindestens einen NCO-terminierten Präpolymers aus Schritt I) mit mindestens einem Hydrophilierungsmittel (A3) ausgewählt aus aromatischen Tricarbonsäuren und/oder Tetracarbonsäuren, unter Erhalt mindestens eines hydrophilierten Präpolymers mit freien NCO-Gruppen, III) Reaktion des mindestens einen hydrophilierten Präpolymers aus Schritt II) mit mindestens einem Kettenverlängerungsmittel (A4) ausgewählt aus organischen Verbindungen mit mindestens zwei Zerewitinoff-aktiven funktionellen Gruppen, unter Erhalt von mindestens einem hydrophilierten Polyurethan-Polymer, und IV) Dispergieren der mindestens einen hydrophilierten Polyurethan-Polymers aus Schritt III) in einem wässrigen Dispersionsmedium; oder III') Dispergieren des mindestens einen hydrophilierten Präpolymers aus Schritt II) in einem wässrigen Dispersionsmedium; IV') Reaktion des in Schritt III') dispergierten mindestens einen hydrophilierten Präpolymers mit mindestens einem Kettenverlängerungsmittel (A4) ausgewählt aus organischen Verbindungen mit mindestens zwei Zerewitinoff-aktiven funktionellen Gruppen, unter Erhalt von hydrophilierten Polyurethan-Polymeren, wobei Schritt II) in mindestens einem Lösungsmittel durchgeführt wird, welches einen Siedepunkt von < 150 °C, bevorzugt < 100 °C, jeweils bei einem Druck von 1013 mbar (a) aufweist. Die Erfindung betrifft weiterhin hieraus erhältliche Dispersionen, eine auf der Dispersion basierende Beschichtung und die Verwendung der Dispersion als Beschichtungsmittel.

## Beschreibung

Die vorliegende Erfindung betrifft ein Verfahren zur Herstellung von wässrigen Polyurethan-Dispersionen, mindestens umfassend die folgenden Schritte I) Umsetzung von mindestens einem organischen Polyisocyanat (A1) mit mindestens einem polymeren Polyol (A2) mit zahlenmittlerem Molekulargewicht von ≥ 400 g/mol bis ≤ 8000 g/mol und einer OH-Funktionalität von ≥ 1,5 bis ≤ 6 unter Erhalt mindestens eines NCO-terminierten Präpolymers, II) Reaktion des mindestens einen NCO-terminierten Präpolymers aus Schritt I) mit mindestens einem Hydrophilierungsmittel (A3) ausgewählt aus aromatischen Tricarbonsäuren und/oder Tetracarbonsäuren, unter Erhalt mindestens eines hydrophilierten Präpolymers mit freien NCO-Gruppen, III) Reaktion des mindestens einen hydrophilierten Präpolymers aus Schritt II) mit mindestens einem Kettenverlängerungsmittel (A4) ausgewählt aus organischen Verbindungen mit mindestens zwei Zerewitinoff-aktiven funktionellen Gruppen, unter Erhalt von mindestens einem hydrophilierten Polyurethan-Polymer, und IV) Dispergieren der mindestens einen hydrophilierten Polyurethan-Polymers aus Schritt III) in einem wässrigen Dispersionsmedium; oder III') Dispergieren des mindestens einen hydrophilierten Präpolymers aus Schritt II) in einem wässrigen Dispersionsmedium; IV') Reaktion des in Schritt III') dispergierten mindestens einen hydrophilierten Präpolymers mit mindestens einem Kettenverlängerungsmittel (A4) ausgewählt aus organischen Verbindungen mit mindestens zwei Zerewitinoff-aktiven funktionellen Gruppen, unter Erhalt von hydrophilierten Polyurethan-Polymeren, wobei Schritt II) in mindestens einem Lösungsmittel durchgeführt wird, welches einen Siedepunkt von < 150 °C, bevorzugt < 100 °C, jeweils bei einem Druck von 1013 mbar (a) aufweist. Die Erfindung betrifft weiterhin hieraus erhältliche Dispersionen, eine auf der Dispersion basierende Beschichtung und die Verwendung der Dispersion als Beschichtungsmittel.

Zur Hydrophilierung von Polyurethandispersionen wurde in der Regel die Dicarbonsäure Dimethylolpropionsäure (DMPS) eingesetzt. Diese Verbindung ist jedoch als schwer löslicher Feststoff in der Handhabung aufwendig und schwierig. Insbesondere ist DPMS in dem häufig eingesetzten Lösungsmittel Aceton schlecht löslich.

Die Dissertation "The Reaction of Isocyanates with Carboxylic Acids and its Application to Polymer Synthesis" von A. H. M. Schotman, TU Delft 1993 (uuid:471daa66-8607-4221-a3a6-cca967887796) beschreibt die Herstellung von Polyurethandispersionen, in der ein NCO-terminiertes Präpolymer aus Isophorondiisocyanat und einem Polyester- oder Polyetherpolyol mit Pyromellitsäure oder, zum Vergleich, mit Dimethylolpropionsäure umgesetzt wird. Anschließend wird neutralisiert und mit wässriger Hydrazinlösung kettenverlängert. Als Lösungsmittel kommt N-Methylpyrrolidon (NMP) mit einem hohen Siedepunkt von 202 °C zum Einsatz. In einigen Beispielen ließen sich wegen mangelnder Stabilität keine Partikelgrößen bestimmen oder die erhaltenen Polymere waren nicht dispergierbar. Des Weiteren enthalten die gemäß diesem Dokument erhaltenen Dispersionen durchweg NMP, was aus regulatorischer Sicht nachteilig ist.

Die vorliegende Erfindung hat sich daher die Aufgabe gestellt, ein Verfahren zur Herstellung von wässrigen Polyurethan-Dispersionen bereitzustellen, wobei die Dispersionen eine verbesserte Lagerungsstabilität und Dispergierbarkeit aufweisen und keine Lösungsmittel enthalten, die einen hohen Siedepunkt aufweisen, so dass sie nur unter hohem Aufwand destillativ abtrennbar sind und/oder in manchen Regionen der Erde regulatorisch nachteilig sind, insbesondere NMP. Des Weiteren sollen die aus den Dispersionen erhaltenen Beschichtungen eine verbesserte thermische Stabilität zeigen.

Diese Aufgaben werden gelöst durch das erfindungsgemäße Verfahren zur Herstellung von wässrigen Polyurethan-Dispersionen, mindestens umfassend die folgenden Schritte:
I) Umsetzung von mindestens einem organischen Polyisocyanat (A1) mit mindestens einem polymeren Polyol (A2) mit zahlenmittlerem Molekulargewicht von ≥ 400 g/mol bis ≤ 8000 g/mol und einer OH-Funktionalität von ≥ 1,5 bis ≤ 6 unter Erhalt mindestens eines NCO-terminierten Präpolymers,
II) Reaktion des mindestens einen NCO-terminierten Präpolymers aus Schritt I) mit mindestens einem Hydrophilierungsmittel (A3) ausgewählt aus aromatischen Tricarbonsäuren und/oder Tetracarbonsäuren, unter Erhalt mindestens eines hydrophilierten Präpolymers mit freien NCO-Gruppen,
III) Reaktion des mindestens einen hydrophilierten Präpolymers aus Schritt II) mit mindestens einem Kettenverlängerungsmittel (A4) ausgewählt aus organischen Verbindungen mit mindestens zwei Zerewitinoff-aktiven funktionellen Gruppen, unter Erhalt von mindestens einem hydrophilierten Polyurethan-Polymer, und
IV) Dispergieren der mindestens einen hydrophilierten Polyurethan-Polymers aus Schritt III) in einem wässrigen Dispersionsmedium;
   oder
III') Dispergieren des mindestens einen hydrophilierten Präpolymers aus Schritt II) in einem wässrigen Dispersionsmedium;
IV') Reaktion des in Schritt III') dispergierten mindestens einen hydrophilierten Präpolymers mit mindestens einem Kettenverlängerungsmittel (A4) ausgewählt aus organischen Verbindungen mit mindestens zwei Zerewitinoff-aktiven funktionellen Gruppen, unter Erhalt von hydrophilierten Polyurethan-Polymeren, wobei Schritt II) in mindestens einem Lösungsmittel durchgeführt wird, welches einen Siedepunkt von < 150 °C, bevorzugt < 100 °C, jeweils bei einem Druck von 1013 mbar (a) aufweist.

Im erfindungsgemäßen Verfahren können entweder gemäß den Schritten III) und IV) die Präpolymere erst kettenverlängert und dann dispergiert werden oder aber gemäß den Schritten III') und IV') erst dispergiert und dann kettenverlängert werden.

Erfindungsgemäß können neben den Schritten I), II), III) und IV) bzw. I), II), III') und IV') noch weitere Schritte in dem erfindungsgemäßen Verfahren durchgeführt werden.

Geeignete Polyisocyanate (A1) sind beispielsweise aromatische, araliphatische, aliphatische oder cycloaliphatische Polyisocyanate. Es können auch Mischungen solcher Polyisocyanate eingesetzt werden. Bevorzugte Polyisocyanate sind ausgewählt aus der Gruppe bestehend aus Butylendiisocyanat, Hexamethylendiisocyanat (HDI), 1,5-Pentamethylendiisocyanat, Isophorondiisocyanat (IPDI), 2,2,4 und/oder 2,4,4-Trimethylhexamethylendiisocyanat, die isomeren Bis(4,4'-isocyanatocyclohexyl)-methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat und deren Derivate mit Urethan-, Isocyanurat-, Allophanat-, Biuret-, Uretdion-, Iminooxadiazindionstruktur. Weiterhin bevorzugt sind Mischungen derselben. Besonders bevorzugt sind Hexamethylendiisocyanat, Isophorondiisocyanat und die isomeren Bis(4,4'-isocyanatocyclohexyl)methane sowie deren Mischungen.

Bei den polymeren Polyolen (A2) handelt es sich beispielsweise um Verbindungen, die ihrerseits aus Monomeren aufgebaut sind und die neben den meist terminalen Isocyanatreaktiven Endgruppen weitere funktionelle Gruppen entlang der Hauptkette aufweisen können.

Geeignete polymere Polyole (A2) sind ausgewählt aus der Gruppe bestehend aus Polyesterpolyolen, Polyacrylatpolyolen, Polyurethanpolyolen, Polycarbonatpolyolen, Polyetherpolyolen, Polyesterpolyacrylatpolyolen, Polyurethanpolyacrylatpolyolen, Polyurethanpolyesterpolyolen, Polyurethanpolyetherpolyolen, Polyurethanpolycarbonatpolyolen, Polyesterpolycarbonatpolyolen, Polyetherpolyaminen, Polyamidopolyaminen und Mischungen davon. Besonders bevorzugt als Komponente (A2) sind Polyesterpolyole, Polyetherpolyole und Polycarbonatpolyole, besonders bevorzugt sind Polyesterpolyole.

Die bevorzugt eingesetzten Polyesterpolyole sind im Allgemeinen aus ein oder mehreren aliphatischen und/oder aromatischen und/oder araliphatischen Dicarbonsäuren und ein oder mehreren aliphatischen und/oder aromatischen und/oder araliphatischen Diolen aufgebaut und werden über einen Polykondensationsprozess hergestellt.

Erfindungsgemäß bevorzugte Polyesterpolyole sind die an sich bekannten Polykondensate aus Di- sowie gegebenenfalls Tri,- und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niedrigmolekularen Alkoholen zur Herstellung der Polyesterpolyole verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopenthylglykolester, wobei die drei letztgenannten Verbindungen bevorzugt sind. Um eine Funktionalität ≥2 zu erzielen, können gegebenenfalls Polyole mit einer Funktionalität von 3 anteilig verwendet werden, beispielsweise Trimethylolpropan, Glycerin, Erythrit, Pentaerythrit, Trimethylolbenzol oder Trishydroxyethylisocyanurat.

Als Dicarbonsäuren sind Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, Bernsteinsäure, 3,3-Diethylglutarsäure, 2,2-Dimethylbernsteinsäure bevorzugt. Anhydride dieser Säuren sind ebenfalls brauchbar, soweit sie existieren. Für die Belange der vorliegenden Erfindung werden die Anhydride infolgedessen durch den Ausdruck "Säure" umfasst. Bevorzugt werden auch Monocarbonsäuren, wie Benzoesäure und Hexancarbonsäure verwendet, vorausgesetzt, dass die resultierende, mittlere Funktionalität des Polyesterpolyols ≥2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigen Hydroxylgruppen geeignet sind, sind beispielsweise Hydroxycapronsäure, Hydroxybuttersäure, Hydroxydecansäure, Hydroxystearinsäure und dergleichen. Erfindungsgemäß einsetzbare Lactone sind beispielsweise ε-Caprolacton, Butyrolacton und Homologe.

Erfindungsgemäß bevorzugt sind Polyesterpolyole auf Basis von Butandiol und/oder Neopentylglykol und/oder Hexandiol und/oder Ethylenglykol und/oder Diethylenglykol mit Adipinsäure und/oder Phthalsäure und/oder Isophthalsäure. Besonders bevorzugt sind Polyesterpolyole auf Basis von Butandiol und/oder Neopentylglykol und/oder Hexandiol mit Adipinsäure und/oder Phthalsäure.

Als Polyetherpolyole seien z.B. die Polyadditionsprodukte der Styroloxid, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole, genannt.

Geeignete hydroxyfunktionelle Polyether weisen beispielsweise eine OH-Funktionalität von 1,5 bis 6,0, bevorzugt 1,8 bis 3,0, eine OH-Zahl von 50 bis 700 mg KOH/g, bevorzugt von 100 bis 600 mg KOH/g Feststoff und ein Molekulargewicht Mn von 106 bis 4 000 g/mol, bevorzugt von 200 bis 3500 g/mol auf, wie z.B. Alkoxylierungsprodukte hydroxyfunktioneller Startermoleküle wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid.

Erfindungsgemäß bevorzugt sind Polypropylenoxidpolyole und Polytetramethylenoxidpolyole mit einem Molekulargewicht von 300 bis 4000 g/mol. Hierbei können die besonders niedermolekularen Polyetherpolyole bei entsprechend hohen OH-Gehalten wasserlöslich sein. Besonders bevorzugt sind jedoch wasserunlösliche Polypropylenoxidpolyole und Polytetramethylenoxidpolyole mit einem Molgewicht von 500 bis 3000 g/mol sowie deren Mischungen.

Die erfindungsgemäß in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage. Bevorzugt enthält die Diolkomponente 40 bis 100 Gew.-% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol, ε-Caprolacton oder durch Veretherung von Hexandiol mit sich selbst zum Di- oder Trihexylenglykol erhalten werden. Auch Polyether-Polycarbonatpolyole können eingesetzt werden.

Erfindungsgemäß bevorzugt sind Polycarbonatpolyole auf Basis von Dimethylcarbonat und Hexandiol und/oder Butandiol und/oder ε-Caprolacton. Ganz besonders bevorzugt sind Polycarbonatpolyole auf Basis von Dimethylcarbonat und Hexandiol und/oder ε-Caprolacton.

Das erfindungsgemäß eingesetzte mindestens eine Hydrophilierungsmittel (A3) umfasst aromatische Tricarbonsäuren und/oder aromatische Tetracarbonsäuren. Erfindungsgemäß besonders bevorzugt wird als Hydrophilierungsmittel (A3) Pyromellitsäure eingesetzt wird.

Es ist erfindungsgemäß möglich, dass neben den genannten Hydrophilierungsmittel (A3) keine weiteren Hydrophilierungsmittel eingesetzt werden. Alternativ können die dem Fachmann bekannten ionischen, potentiell ionischen oder nichtionischen Hydrophilierungsmittel zusätzlich zu den aromatischen Tri- oder Tetracarbonsäuren mit verwendet werden. Bevorzugte ionische oder potentielle ionische Verbindungen sind solche, die über Carboxy- oder Carboxylat- und/oder Sulfonatgruppen und/oder Ammoniumgruppen verfügen. Geeignete nichtionisch hydrophilierend wirkende Verbindungen sind zum Beispiel Polyoxyalkylenether, die mindestens eine Hydroxy- oder Aminogruppe enthalten.

Das erfindungsgemäß eingesetzte mindestens eine Kettenverlängerungsmittel (A4) umfasst organische Verbindungen mit wenigstens zwei Zerewitinoff-aktiven funktionellen Gruppen wie Diamine, Dialkohole oder Aminoalkohole. Vor der Kettenverlängerung in Schritt III) kann die Reaktionsmischung durch Zugabe von Basen wie Triethylamin neutralisiert werden. Beispiele für das mindestens eine Kettenverlängerungsmittel (A4) sind organische Verbindungen mit Molekulargewichten von 62 bis 399 g/mol. Der Kettenverlängerungsgrad, also das Äquivalentverhältnis von NCO-reaktiven Gruppen der zur Kettenverlängerung und Kettenterminierung eingesetzten Verbindungen zu freien NCO-Gruppen des Prepolymers, liegt im Allgemeinen bei 40 bis 150%, bevorzugt 50 bis 110%, besonders bevorzugt 60 bis 100%.

Zur Kettenverlängerung der Prepolymere mit dem mindestens einen Kettenverlängerungsmittel (A4) können beispielsweise Amine verwendet werden, die keine ionischen bzw. ionogenen, wie anionisch hydrophilierenden Gruppen aufweisen. Als Komponente (A4) werden bevorzugt organische Di- oder Polyamine wie beispielsweise 1,2-Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 4,4-Diaminodicyclohexylmethan und/oder Dimethylethylendiamin eingesetzt.

Darüber hinaus können als Komponente (A4) auch Verbindungen, die neben einer primären Aminogruppe auch sekundäre Aminogruppen oder neben einer primären oder sekundären Aminogruppe auch OH-Gruppen aufweisen, eingesetzt werden. Beispiele hierfür sind primäre/sekundäre Amine, wie Diethanolamin, 3-Amino-1-methylaminopropan, 3-Amino-1-ethylaminopropan, 3-Amino-1-cyclohexyl-aminopropan, 3-Amino-1-methylaminobutan, Alkanolamine wie N-Aminoethyl-ethanolamin, Ethanolamin, 3-Aminopropanol, Neopentanolamin.

Als Komponente (A4) eignen sich auch Dihydrazide wie beispielsweise Adipinsäuredihydrazid, Oxalsäuredihydrazid, Carbohydrazid, und Bernsteinsäuredihydrazid. Ebenfalls kommen längerkettige, aminofunktionelle Verbindungen wie Polyetheramine ("Jeffamine") als Komponente (A4) in Frage.

Erfindungsgemäß bevorzugt werden als Komponente (A4) 1,2-Ethylendiamin, Bis(4-aminocyclohexyl)methan, 1,4-Diaminobutan, Isophorondiamin, Ethanolamin, Diethanolamin und Diethylentriamin eingesetzt.

Zur Kettenverlängerung der Prepolymere mit mindestens einem Kettenverlängerungsmittel (A4) können weiterhin beispielsweise niedermolekulare Polyole verwendet werden. Geeignete niedermolekulare Polyole sind kurzkettige, d.h. 2 bis 20 Kohlenstoffatome enthaltende, aliphatische, araliphatische oder cycloaliphatische Verbindungen. Beispiele für entsprechende niedermolekulare Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Erfindungsgemäß bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Weitere Beispiele für das mindestens eine Kettenverlängerungsmittel (A4) sind Dihydrazide wie Oxalsäuredihydrazid, Carbohydrazid und Adipinsäuredihydrazid, besonders bevorzugt sind Carbohydrazid und Adipinsäuredihydrazid. Weiter geeignet als mindestens ein Kettenverlängerungsmittel (A4) sind Dithiole. Beispiele für geeignete Dithiole sind 1,2-Ethandithiol, 1,3-Propandithiol, 1,4-Butandithiol und 1,6-Hexandithiol. Besonders bevorzugt sind 1,2-Ethandithiol und 1,6-Hexandithiol.

In einer weiteren bevorzugten Ausführungsform sind die Kettenverlängerungsmittel A4) ausgewählt aus der Gruppe bestehend aus 1,2-Ethylendiamin, Bis(4-aminocyclohexyl)methan, 1,4-Diaminobutan, Isophorondiamin, Ethanolamin, Diethanolamin, Diethylentriamin oder einer Mischung aus mindestens zwei der vorgenannten Verbindungen.

In einer weiteren bevorzugten Ausführungsform werden in der Reaktion in Schritt I) die Anteile von Polyisocyanaten A1) und Polyolen A2) so bemessen, dass ein theoretischer Gehalt an NCO-Gruppen von ≥ 3,5 Gewichts-%, besonders bevorzugt ≥ 4,0 Gewichts-%, ganz besonders bevorzugt ≥ 4,3 Gewichts-%) im erhaltenen Präpolymer erreicht wird. Zur Kontrolle der Reaktion kann der NCO-Gehalt gemäß DIN-EN ISO 11909 - 2007-05 bestimmt werden. Die Obergrenze des theoretischen NCO-Gehaltes beträgt vorzugsweise ≤ 10 Gewichts-%, besonders bevorzugt ≤ 5 Gewichts-%.

In einer weiteren bevorzugten Ausführungsform werden in der Reaktion in Schritt II) die Anteile von Präpolymeren aus Schritt I) und Hydrophilierungsmitteln A3) so bemessen, dass ein theoretischer Gehalt an NCO-Gruppen von ≥ 0,5 Gewichts-%, besonders bevorzugt ≥ 0,7 Gewichts-%, ganz besonders bevorzugt ≥ 0,9 Gewichts-%, im erhaltenen hydrophilierten Präpolymer erreicht wird. Zur Kontrolle der Reaktion kann der NCO-Gehalt gemäß DIN-EN ISO 11909 - 2007-05 bestimmt werden. Die Obergrenze des theoretischen NCO-Gehaltes beträgt vorzugsweise ≤ 4 Gewichts-%, besonders bevorzugt ≤ 2 Gewichts-%.

In einer weiteren bevorzugten Ausführungsform wird Schritt II) in einem Lösungsmittel durchgeführt, welches einen Siedepunkt bei einem Druck von 1013 mbar (a) von < 150 °C, bevorzugt < 100 °C, aufweist.

In einer weiteren bevorzugten Ausführungsform werden Schritte III) oder IV') in einem Lösungsmittel durchgeführt, welches einen Siedepunkt bei einem Druck von 1013 (a) mbar von < 150 °C, bevorzugt < 100 °C, aufweist.

Das oder die Lösungsmittel in Schritten II), III) oder IV') haben somit einen niedrigeren Siedepunkt als Wasser und können, auch in Gegenwart von Wasser, destillativ entfernt werden. Geeignete und auch mit Wasser mischbare Lösemittel enthalten zumindest ein Sauerstoff- und/oder Stickstoffatom und/oder Schwefelatom. Bevorzugt sind ketofunktionelle Lösemittel, hydroxyfunktionelle Lösemittel, etherfunktionelle Lösemittel, esterfunktionelle Lösemittel, Lactone, gemischt ether- und esterfunktionelle Lösemittel, carbonatfunktionelle Lösemittel, polare stickstoffhaltige Lösemittel und schwefelhaltige Lösemittel.

Bevorzugte ketofunktionelle Lösungsmittel sind Aceton und Butanon. Bevorzugte hydroxyfunktionelle Lösungsmittel sind Ethanol und Isopropanol. Bevorzugte etherfunktionelle Lösungsmittel sind Tetrahydrofuran, Dioxan und Dipropylenglykolmonomethylether. Bevorzugte esterfunktionelle Lösungsmittel sind Ethylacetat und Butylacetat. Ein bevorzugtes Lacton ist Caprolacton. Ein bevorzugtes gemischt ether- und esterfunktionelle Lösungsmittel ist Methoxypropylacetat. Ein bevorzugtes carbonatfunktionelles Lösungsmittel ist Dimethylcarbonat. Bevorzugte stickstoffhaltige Lösemittel sind 1-Methyl-2-pyrrolidon, dessen höhere Homologe und Dimethylacetamid. Ein bevorzugtes schwefelhaltiges Lösungsmittel ist Dimethylsulfoxid.

In einer weiteren bevorzugten Ausführungsform wird nach Schritt IV) oder IV') das Lösungsmittel abdestilliert.

In einer weiteren bevorzugten Ausführungsform weist die nach Schritt IV) oder IV') erhaltene wässrige Polyurethan-Dispersion einen Feststoffgehalt von ≥ 25 Gewichts-%, bezogen auf das Gesamtgewicht der Dispersion, auf. Vorzugsweise beträgt der Feststoffgehalt ≥ 30 Gewichts-%, mehr bevorzugt ≥ 35 Gewichts-%. Die Bestimmung der Festkörpergehalte erfolgt nach DIN-EN ISO 3251 - 2008-06.

Ein weiterer Gegenstand ist eine wässrige Polyurethan-Dispersion, die durch das erfindungsgemäße Verfahren erhältlich ist. Die erfindungsgemäßen Dispersionen zeigen selbst nach 3 Monaten Lagerung bei Raumtemperatur keine Sedimentation von Polyurethan-Partikeln und werden daher als stabil angesehen.

Die erfindungsgemäße, wässrige Polyurethan-Dispersion zeichnet sich insbesondere dadurch aus, dass sie keine zumindest in manchen Regionen der Erde, regulatorisch bedenklichen, organischen Lösungsmittel, insbesondere N-Methyl-2-pyrrolidon, enthält. Des Weiteren zeichnet sich die erfindungsgemäße Dispersion dadurch aus, dass sie keine organischen Lösungsmittel mit einem Siedepunkt bei 1013 mbar (a) von größer oder gleich 200 °C enthalten.

Die vorliegende Erfindung betrifft daher auch eine wässrige Polyurethan-Dispersion, wobei diese keine regulatorisch bedenklichen, organischen Lösungsmittel, insbesondere N-Methyl-2-pyrrolidon, enthält. Im Rahmen der vorliegenden Erfindung bedeutet dies, dass der dass der Gehalt dieser Lösungsmittel in der erfindungsgemäßen wässrigen Dispersion, unterhalb von 0,5 Gew.-%, bevorzugt unterhalb von 0,1 Gew.-%, liegt. Alle weiteren Details und bevorzugten Ausführungsformen bezüglich des vorliegenden Polyurethans sind weiter oben beschrieben und gelten hier entsprechend.

In einer bevorzugten Ausführungsform beträgt der Gehalt an organischen Lösungsmitteln ≤ 1 Gewichts-%, bezogen auf das Gesamtgewicht der Dispersion. Vorzugsweise beträgt der Gehalt an organischen Lösungsmitteln, zum Beispiel an Aceton, ≤ 0,5 Gewichts-% und mehr bevorzugt ≤ 0,1 Gewichts-%, jeweils bestimmt nach DIN EN ISO 11890-2 - 2013-07.

In einer weiteren bevorzugten Ausführungsform weist die Dispersion einen Feststoffgehalt von ≥ 25 Gewichts-%, bezogen auf das Gesamtgewicht der Dispersion, auf. Vorzugsweise beträgt der Feststoffgehalt ≥ 30 Gewichts-%, mehr bevorzugt ≥ 35 Gewichts-%. Die Bestimmung der Festkörpergehalte erfolgt nach DIN-EN ISO 3251 - 2008-06.

Die Erfindung betrifft ebenfalls eine Beschichtung, die erhältlich ist durch Trocknen und Koaleszieren einer erfindungsgemäßen Dispersion. Weitere Komponenten, die der erfindungsgemäßen Dispersion zur Herstellung einer Beschichtung zugesetzt werden können, sind dem Fachmann an sich bekannt. Die Beschichtung kann weiterhin einer Wärmebehandlung unterworfen werden, um freie vicinale COOH-Gruppen in Gegenwart von primären Aminen zu Imiden umzusetzen.

In einer bevorzugten Ausführungsform weist die Beschichtung eine Zersetzungstemperatur von ≥ 240 °C auf, wobei die Zersetzungstemperatur als die Temperatur definiert ist, bei der der Massenverlust der Probe bei einer Heizrate von 20 K/min nicht mehr tangential verläuft. Die Zersetzungstemperatur kann auch ≥ 250 °C und vorzugsweise ≥ 260 °C betragen. Es ist weiterhin bevorzugt, dass die Zersetzungstemperatur um ≥ 10 °C, bevorzugt ≥ 20 °C und mehr bevorzug ≥ 30 °C oberhalb der Zersetzungstemperatur einer Beschichtung liegt, die mit Ausnahme des Austauschs der aromatischen Tri- oder Tetracarbonsäure durch Dimethylolpropionsäure in identischer Weise hergestellt wurde.

Erfindungsgemäß mit eingeschlossen ist die Verwendung einer erfindungsgemäßen Dispersion als Beschichtungsmittel.

### Beispiele

Die Erfindung wurde anhand der nachfolgenden Beispiele näher erläutert, ohne jedoch darauf beschränkt zu sein.

Eingesetzte Rohstoffe:
- Desmophen^{®} 1652:: DE 1652, Polyester aus Adipinsäure, Ethylenglykol, Diethylenglykol und 1,4-Butandiol, OH-Zahl = 56, Mₙ = 2000 g·mol⁻¹ (Covestro Deutschland AG,Leverkusen, DE).
- Desmodur^{®} I:: IPDI, Isophorondiisocyanat, Covestro Deutschland AG, Leverkusen, DE).
- IPDA:: Isophorondiamin (Aldrich, DE)
- PMS:: Pyromellitsäure (Aldrich, DE)
- DMPS:: Dimethylolpropionsäure (Aldrich, DE)
- TEA:: Triethylamin (Aldrich, DE)
- EDIPA:: Ethyldiisopropylamin (Aldrich, DE)

### Verwendete Methoden:

Die Bestimmung der Festkörpergehalte erfolgte nach DIN-EN ISO 3251- 2008-06.

NCO-Gehalte wurden, wenn nicht ausdrücklich anders erwähnt, volumetrisch gemäß DIN-EN ISO 11909 - 2007-05 bestimmt.

Die mittleren Teilchengrößen wurden mittels Photokorrelations-Spektroskopie ermittelt (Malvern Instruments, Typ: Zetasizer 1000)

Thermische Zersetzung: Die thermogravimetrischen Analysen wurden auf einer Mikrofeinwaage der Fa. Perkin-Elmer (Gerät TGA-7) durchgeführt. Die Heizrate betrug 20 K/min. unter inerter Stickstoffatmosphäre.

### Beispiel 1 (Gegenbeispiel)

285,0 g des Polyesterpolyols DE 1652 und 10,5 g DMPS wurden mit 83,3 g IPDI bei 70 °C versetzt und anschließend bei 100 °C zum Präpolymer umgesetzt bis der theoretische NCO-Wert (NCO Theorie = 3,42%) erreicht war. Anschließend wurde das Präpolymer in 673 g Aceton gelöst, auf 40 °C abgekühlt und es erfolgte die Zugabe von 8,0 g TEA zur Neutralisation. Danach wurde eine Lösung von 22,3 g IPDA in 66 g Wasser zur Kettenverlängerung zugegeben und 10 min. weiter gerührt. Danach erfolgte die Zugabe von 694 g vollentsalztem Wasser zur Dispergierung und das Aceton wurde bei einem Druck von 125 mbar bei einer Temperatur zwischen 40 und 50 °C destillativ entfernt. Es entstand eine wässrige, im Wesentlichen lösungsmittelfreie Dispersion eines Feststoffgehalts von 34,9% mit einem pH-Wert von 7,9 und einer mittleren Teilchengröße von 179 nm.

### Beispiel 2 (erfindungsgemäß)

285,0 g des Polyesterpolyols DE 1652 wurden mit 73,3 g IPDI bei 70 °C versetzt und anschließend bei 100 °C zum Präpolymer umgesetzt bis der theoretische NCO-Wert (NCO Theorie = 4,40%) erreicht war. Daraufhin wurden bei 80 °C 699 g Aceton zugeführt und auf 50 °C abgekühlt wobei sich das Präpolymer löste. Es erfolgte die Zugabe einer Lösung von 7,9 g PMS in 87 g Aceton wobei die Lösung unter CO₂-Abspaltung reagiert. Die Lösung wurde unter Rückfluss (58 °C) 120 min. weiter reagiert bis das Polymer den theoretischen NCO-Wert von 1,16% erreicht hatte. Daraufhin wurde auf 45 °C abgekühlt und es erfolgte die Zugabe von 6,3 g TEA zur Neutralisation. Es wurde danach eine Lösung von 20,2 g IPDA in 59,4 g Wasser zur Kettenverlängerung hinzu gegeben, 10 min. weiter gerührt und anschließend erfolgte die Dispergierung mit 670 g vollentsalztem Wasser. Das Aceton wurde bei einem Druck von 125 mbar bei einer Temperatur zwischen 40 und 50 °C destillativ entfernt. Es entstand eine wässrige, im Wesentlichen lösungsmittelfreie Dispersion eines Feststoffgehalts von 31,0% mit einem pH-Wert von 7,3 und einer mittleren Teilchengröße von 248 nm.

### Beispiel 3 (erfindungsgemäß)

285,0 g des Polyesterpolyols DE 1652 wurden mit 73,3 g IPDI bei 70 °C versetzt und anschließend bei 100 °C zum Präpolymer umgesetzt bis der theoretische NCO-Wert (NCO Theorie = 4,40%) erreicht war. Daraufhin wurden bei 80 °C 699 g Aceton zugeführt und auf 50 °C abgekühlt wobei sich das Präpolymer löste. Es erfolgte die Zugabe einer Lösung von 8,9 g PMS in 97,7 g Aceton wobei die Lösung unter CO₂-Abspaltung reagiert. Die Lösung wurde unter Rückfluss (58 °C) 120 min. weiter reagiert bis das Polymer den theoretischen NCO-Wert von 1,10% erreicht hatte. Daraufhin wurde auf 45 °C abgekühlt und es erfolgte die Zugabe von 7,0 g TEA zur Neutralisation. Es wurde danach eine Lösung von 19,7 g IPDA in 57,9 g Wasser zur Kettenverlängerung hinzu gegeben, 10 min. weiter gerührt und anschließend erfolgte die Dispergierung mit 674 g vollentsalztem Wasser. Das Aceton wurde bei einem Druck von 125 mbar bei einer Temperatur zwischen 40 und 50 °C destillativ entfernt. Es entstand eine wässrige, im Wesentlichen lösungsmittelfreie Dispersion eines Feststoffgehalts von 34,1% mit einem pH-Wert von 7,3 und einer mittleren Teilchengröße von 220 nm.

### Beispiel 4 (erfindungsgemäß)

285,0 g des Polyesterpolyols DE 1652 wurden mit 73,3 g IPDI bei 70 °C versetzt und anschließend bei 100 °C zum Präpolymer umgesetzt bis der theoretische NCO-Wert (NCO Theorie = 4,40%) erreicht war. Daraufhin wurden bei 80 °C 699 g Aceton zugeführt und auf 50 °C abgekühlt wobei sich das Präpolymer löste. Es erfolgte die Zugabe einer Lösung von 9,9 g PMS in 108,6 g Aceton wobei die Lösung unter CO₂-Abspaltung reagiert. Die Lösung wurde unter Rückfluss (58 °C) 120 min. weiter reagiert bis das Polymer den theoretischen NCO-Wert von 1,07% erreicht hatte. Daraufhin wurde auf 45 °C abgekühlt und es erfolgte die Zugabe von 7,9 g TEA zur Neutralisation. Es wurde danach eine Lösung von 18,9 g IPDA in 55,6 g Wasser zur Kettenverlängerung hinzu gegeben, 10 min. weiter gerührt und anschließend erfolgte die Dispergierung mit 678 g vollentsalztem Wasser. Das Aceton wurde bei einem Druck von 125 mbar bei einer Temperatur zwischen 40 und 50 °C destillativ entfernt. Es entstand eine wässrige, im Wesentlichen lösungsmittelfreie Dispersion eines Feststoffgehalts von 35,2% mit einem pH-Wert von 7,2 und einer mittleren Teilchengröße von 181 nm.

### Beispiel 5 (erfindungsgemäß)

285,0 g des Polyesterpolyols DE 1652 wurden mit 73,3 g IPDI bei 70 °C versetzt und anschließend bei 100 °C zum Präpolymer umgesetzt bis der theoretische NCO-Wert (NCO Theorie = 4,40%) erreicht war. Daraufhin wurden bei 80 °C 699 g Aceton zugeführt und auf 50 °C abgekühlt wobei sich das Präpolymer löste. Es erfolgte die Zugabe einer Lösung von 12,0 g PMS in 131,6 g Aceton wobei die Lösung unter CO₂-Abspaltung reagiert. Die Lösung wurde unter Rückfluss (58 °C) 120 min. weiter reagiert bis das Polymer den theoretischen NCO-Wert von 0,99% erreicht hatte. Daraufhin wurde auf 45 °C abgekühlt und es erfolgte die Zugabe von 9,5 g TEA zur Neutralisation. Es wurde danach eine Lösung von 17,6 g IPDA in 51,8 g Wasser zur Kettenverlängerung hinzu gegeben, 10 min. weiter gerührt und anschließend erfolgte die Dispergierung mit 686 g vollentsalztem Wasser. Das Aceton wurde bei einem Druck von 125 mbar bei einer Temperatur zwischen 40 und 50 °C destillativ entfernt. Es entstand eine wässrige, im Wesentlichen lösungsmittelfreie Dispersion eines Feststoffgehalts von 34,7% mit einem pH-Wert von 7,3 und einer mittleren Teilchengröße von 102 nm.

### Beispiel 6 (erfindungsgemäß)

285,0 g des Polyesterpolyols DE 1652 wurden mit 73,3 g IPDI bei 70 °C versetzt und anschließend bei 100 °C zum Präpolymer umgesetzt bis der theoretische NCO-Wert (NCO Theorie = 4,40%) erreicht war. Daraufhin wurden bei 80 °C 683 g Aceton zugeführt und auf 50 °C abgekühlt wobei sich das Präpolymer löste. Es erfolgte die Zugabe einer Lösung von 13,0 g PMS in 142,5 g Aceton wobei die Lösung unter CO₂-Abspaltung reagiert. Die Lösung wurde unter Rückfluss (58 °C) 120 min. weiter reagiert bis das Polymer den theoretischen NCO-Wert von 0,96% erreicht hatte. Daraufhin wurde auf 45 °C abgekühlt und es erfolgte die Zugabe von 10,3 g TEA zur Neutralisation. Es wurde danach eine Lösung von 16,9 g IPDA in 49,6 g Wasser zur Kettenverlängerung hinzu gegeben, 10 min. weiter gerührt und anschließend erfolgte die Dispergierung mit 690 g vollentsalztem Wasser. Das Aceton wurde bei einem Druck von 125 mbar bei einer Temperatur zwischen 40 und 50 °C destillativ entfernt. Es entstand eine wässrige, im Wesentlichen lösungsmittelfreie Dispersion eines Feststoffgehalts von 34,0% mit einem pH-Wert von 7,3 und einer mittleren Teilchengröße von 81 nm.

### Beispiel 7 (erfindungsgemäß)

285,0 g des Polyesterpolyols DE 1652 wurden mit 73,3 g IPDI bei 70 °C versetzt und anschließend bei 100 °C zum Präpolymer umgesetzt bis der theoretische NCO-Wert (NCO Theorie = 4,40%) erreicht war. Daraufhin wurden bei 80 °C 679 g Aceton zugeführt und auf 50 °C abgekühlt wobei sich das Präpolymer löste. Es erfolgte die Zugabe einer Lösung von 14,0 g PMS in 154 g Aceton wobei die Lösung unter CO₂-Abspaltung reagiert. Die Lösung wurde unter Rückfluss (58 °C) 120 min. weiter reagiert bis das Polymer den theoretischen NCO-Wert von 0,92% erreicht hatte. Daraufhin wurde auf 45 °C abgekühlt und es erfolgte die Zugabe von 11,2 g TEA zur Neutralisation. Es wurde danach eine Lösung von 16,0 g IPDA in 47,2 g Wasser zur Kettenverlängerung hinzu gegeben, 10 min. weiter gerührt und anschließend erfolgte die Dispergierung mit 695 g vollentsalztem Wasser. Das Aceton wurde bei einem Druck von 125 mbar bei einer Temperatur zwischen 40 und 50 °C destillativ entfernt. Es entstand eine wässrige, im Wesentlichen lösungsmittelfreie Dispersion eines Feststoffgehalts von 32,8% mit einem pH-Wert von 7,2 und einer mittleren Teilchengröße von 58 nm.

### Beispiel 8 (erfindungsgemäß)

285,0 g des Polyesterpolyols DE 1652 wurden mit 73,3 g IPDI bei 70 °C versetzt und anschließend bei 100 °C zum Präpolymer umgesetzt bis der theoretische NCO-Wert (NCO Theorie = 4,40%) erreicht war. Daraufhin wurden bei 80 °C 699 g Aceton zugeführt und auf 50 °C abgekühlt wobei sich das Präpolymer löste. Es erfolgte die Zugabe einer Lösung von 9,9 g PMS in 108,6 g Aceton wobei die Lösung unter CO₂-Abspaltung reagiert. Die Lösung wurde unter Rückfluss (58 °C) 120 min. weiter reagiert bis das Polymer den theoretischen NCO-Wert von 1,07% erreicht hatte. Daraufhin wurde auf 45 °C abgekühlt und es erfolgte die Zugabe von 7,0 g TEA zur Neutralisation. Es wurde danach eine Lösung von 18,9 g IPDA in 55,6 g Wasser zur Kettenverlängerung hinzu gegeben, 10 min. weiter gerührt und anschließend erfolgte die Dispergierung mit 678 g vollentsalztem Wasser. Das Aceton wurde bei einem Druck von 125 mbar bei einer Temperatur zwischen 40 und 50 °C destillativ entfernt. Es entstand eine wässrige, im Wesentlichen lösungsmittelfreie Dispersion eines Feststoffgehalts von 35,3% mit einem pH-Wert von 7,3 und einer mittleren Teilchengröße von 188 nm.

### Beispiel 9 (erfindungsgemäß)

285,0 g des Polyesterpolyols DE 1652 wurden mit 73,3 g IPDI bei 70 °C versetzt und anschließend bei 100 °C zum Präpolymer umgesetzt bis der theoretische NCO-Wert (NCO Theorie = 4,40%) erreicht war. Daraufhin wurden bei 80 °C 699 g Aceton zugeführt und auf 50 °C abgekühlt wobei sich das Präpolymer löste. Es erfolgte die Zugabe einer Lösung von 9,9 g PMS in 108,6 g Aceton wobei die Lösung unter CO₂-Abspaltung reagiert. Die Lösung wurde unter Rückfluss (58 °C) 120 min. weiter reagiert bis das Polymer den theoretischen NCO-Wert von 1,07% erreicht hatte. Daraufhin wurde auf 45 °C abgekühlt und es erfolgte die Zugabe von 10,1 g EDIPA zur Neutralisation. Es wurde danach eine Lösung von 18,9 g IPDA in 55,6 g Wasser zur Kettenverlängerung hinzu gegeben, 10 min. weiter gerührt und anschließend erfolgte die Dispergierung mit 678 g vollentsalztem Wasser. Das Aceton wurde bei einem Druck von 125 mbar bei einer Temperatur zwischen 40 und 50 °C destillativ entfernt. Es entstand eine wässrige, im Wesentlichen lösungsmittelfreie Dispersion eines Feststoffgehalts von 35,3% mit einem pH-Wert von 7,3 und einer mittleren Teilchengröße von 188 nm.

Die nachfolgende Tabelle fasst einige erhaltene Ergebnisse zusammen.

**Tabelle:**

| Beispiel | Hydrophilierung | COOH [mmol/g Feststoff] | MTG [nm] | Zersetzungsbeginn [°C] |
|---|---|---|---|---|
| 1* | DMPS | 0,192 | 179 | 235 |
| 2 | PMS | 0,158 | 248 | -- |
| 3 | PMS | 0,178 | 220 | -- |
| 4 | PMS | 0,197 | 181 | 265 |
| 5 | PMS | 0,238 | 102 | -- |
| 6 | PMS | 0,257 | 81 | -- |
| 7 | PMS | 0,276 | 58 | -- |
| 8 | PMS | 0,197 | 188 | -- |
| 9 | PMS | 0,197 | 169 | -- |

| | | | | |
|---|---|---|---|---|
| *: Vergleichsversuch; MTG: mittlere Teilchengröße; --: nicht bestimmt | | | | |

Ein Vergleich des Gegenbeispiels 1 mit dem erfindungsgemäßen Beispiel 4 zeigt, dass beide Produkte bei sehr ähnlicher Konzentration von COOH-Gruppen eine sehr ähnliche Teilchengröße aufweisen. Die erfindungsgemäße Dispersion 4 weist aber einen um 30 °C zu höherer Temperatur verschobenen Zersetzungsbeginn auf. Der Vergleich aller erfindungsgemäßen Produkte zeigt, dass sich die Teilchengröße sehr gut mit der Menge COOH-Gruppen und damit der Konzentration an PMS einstellen lässt und das bei gleicher COOH-Konzentration die Teilchengröße über den Neutralisationsgrad (Bsp. 8) weiterhin beeinflusst wurde. Neben dem Triethylamin können auch weitere, übliche Neutralisationsmittel (Bsp. 9) eingesetzt werden.

## Patentansprüche

1. Verfahren zur Herstellung von wässrigen Polyurethan-Dispersionen, mindestens umfassend die folgenden Schritte:
I) Umsetzung von mindestens einem organischen Polyisocyanat (A1) mit mindestens einem polymeren Polyol (A2) mit zahlenmittlerem Molekulargewicht von ≥ 400 g/mol bis ≤ 8000 g/mol und einer OH-Funktionalität von ≥ 1,5 bis ≤ 6 unter Erhalt mindestens eines NCO-terminierten Präpolymers,
II) Reaktion des mindestens einen NCO-terminierten Präpolymers aus Schritt I) mit mindestens einem Hydrophilierungsmittel (A3) ausgewählt aus aromatischen Tricarbonsäuren und/oder Tetracarbonsäuren, unter Erhalt mindestens eines hydrophilierten Präpolymers mit freien NCO-Gruppen,
III) Reaktion des mindestens einen hydrophilierten Präpolymers aus Schritt II) mit mindestens einem Kettenverlängerungsmittel (A4) ausgewählt aus organischen Verbindungen mit mindestens zwei Zerewitinoff-aktiven funktionellen Gruppen, unter Erhalt von mindestens einem hydrophilierten Polyurethan-Polymer, und
IV) Dispergieren der mindestens einen hydrophilierten Polyurethan-Polymers aus Schritt III) in einem wässrigen Dispersionsmedium;
oder
III') Dispergieren des mindestens einen hydrophilierten Präpolymers aus Schritt II) in einem wässrigen Dispersionsmedium;
IV') Reaktion des in Schritt III') dispergierten mindestens einen hydrophilierten Präpolymers mit mindestens einem Kettenverlängerungsmittel (A4) ausgewählt aus organischen Verbindungen mit mindestens zwei Zerewitinoff-aktiven funktionellen Gruppen, unter Erhalt von hydrophilierten Polyurethan-Polymeren;
**dadurch gekennzeichnet, dass** Schritt II) in mindestens einem Lösungsmittel durchgeführt wird, welches einen Siedepunkt von < 100 °C bei einem Druck von 1013 mbar (a) aufweist.

2. Verfahren nach Anspruch 1, **dadurch gekennzeichnet, dass** als Hydrophilierungsmittel (A3) Pyromellitsäure eingesetzt wird.

3. Verfahren nach Anspruch 1 oder 2, **dadurch gekennzeichnet, dass** das mindestens eine Kettenverlängerungsmittel (A4) ausgewählt ist aus der Gruppe bestehend aus 1,2-Ethylendiamin, Bis(4-aminocyclohexyl)methan, 1,4-Diaminobutan, Isophorondiamin, Ethanolamin, Diethanolamin, Diethylentriamin und Mischungen davon.

4. Verfahren nach einem der Ansprüche 1 bis 3, **dadurch gekennzeichnet, dass** in Schritt I) die Anteile des mindestens einen Polyisocyanats (A1) und des mindestens einen polymeren Polyols (A2) so bemessen werden, dass ein theoretischer Gehalt an NCO-Gruppen von ≥ 3,5 Gewichts-% im erhaltenen mindestens einen Präpolymer erreicht wird.

5. Verfahren nach einem der Ansprüche 1 bis 4, **dadurch gekennzeichnet, dass** in der Reaktion in Schritt II) die Anteile des mindestens einen NCO-terminierten Präpolymers aus Schritt I) und des mindestens einen Hydrophilierungsmittels (A3) so bemessen werden, dass ein theoretischer Gehalt an NCO-Gruppen von ≥ 0,5 Gewichts-% im erhaltenen mindestens einen hydrophilierten Präpolymer erreicht wird.

6. Verfahren nach einem der Ansprüche 1 bis 5, **dadurch gekennzeichnet, dass** die Schritte III) und/oder IV') in mindestens einem Lösungsmittel durchgeführt werden, welches einen Siedepunkt von < 100 °C bei einem Druck von 1013 mbar (a) aufweist.

7. Verfahren nach einem der Ansprüche 1 bis 6, **dadurch gekennzeichnet, dass** nach Schritt IV) oder IV') das mindestens eine Lösungsmittel abdestilliert wird.

8. Verfahren nach einem der Ansprüche 1 bis 7, **dadurch gekennzeichnet, dass** die nach Schritt IV) oder IV') erhaltene wässrige Polyurethan-Dispersion einen Feststoffgehalt von ≥ 25 Gewichts-%, bezogen auf das Gesamtgewicht der Dispersion, aufweist.

9. Wässrige Polyurethan-Dispersion, erhältlich durch das Verfahren nach einem der Ansprüche 1 bis 8.

10. Wässrige Polyurethan-Dispersion, **dadurch gekennzeichnet, dass** diese keine organischen Lösungsmittel, insbesondere kein N-Methyl-2-pyrrolidon, enthält.

11. Dispersion nach Anspruch 9 oder 10, **dadurch gekennzeichnet, dass** der dass der Gehalt dieser Lösungsmittel unterhalb von 0,5 Gew.-%, bevorzugt unterhalb von 0,1 Gew.-%, liegt.

12. Dispersion nach einem der Ansprüche 9 bis 11, **dadurch gekennzeichnet, dass** die Dispersion einen Feststoffgehalt von ≥ 25 Gewichts-%, bezogen auf das Gesamtgewicht der Dispersion, aufweist.

13. Beschichtung, erhältlich durch Trocknen und Koaleszieren einer Dispersion nach einem der Ansprüche 9 bis 12.

14. Beschichtung nach Anspruch 13, **dadurch gekennzeichnet, dass** die Beschichtung eine Zersetzungstemperatur von ≥ 240 °C aufweist, wobei die Zersetzungstemperatur als die Temperatur definiert ist, bei der der Massenverlust der Probe bei einer Heizrate von 20 K/min nicht mehr tangential verläuft.

15. Verwendung einer Dispersion nach einem der Ansprüche 9 bis 12 als Beschichtungsmittel.
